Europäisches Patentamt

European Patent Office

Office européen des brevets

(19)

(11) Numéro de publication : **0 515 242 A1**

## (12) DEMANDE DE BREVET EUROPEEN

(21) Numéro de dépôt : **92401245.3**

(22) Date de dépôt : **30.04.92**

(51) Int. Cl.⁵ : **H04M 9/08, H04B 3/20**

(30) Priorité : **21.05.91 FR 9106109**

(43) Date de publication de la demande :
**25.11.92 Bulletin 92/48**

(84) Etats contractants désignés :
**AT BE CH DE DK ES GB GR IT LI LU MC NL PT SE**

(71) Demandeur : **SAT (Société Anonyme de Télécommunications)**
**6, avenue d'Iéna**
**F-75116 Paris (FR)**

(72) Inventeur : **Lavoisard, Jean-Louis**
**58B, rue du dessous-des-Berges**
**F-75625 Paris Cédex 13 (FR)**
Inventeur : **Bourgoin, Alain**
**58B, rue du dessous-des-Berges**
**F-75625 Paris Cédex 13 (FR)**

(74) Mandataire : **Cabinet Martinet & Lapoux**
**BP 405**
**F-78055 Saint Quentin en Yvelines Cédex (FR)**

(54) **Procédé pour optimiser la qualité des communications téléphoniques.**

(57) L'invention consiste à optimiser la qualité de chacune des communications établies dans un premier terminal téléphonique, en sélectionnant des moyens de minimisation d'écho en fonction de critères de qualité, afin d'offrir le meilleur confort de communication à l'usager du terminal. Pour une communication entre le premier terminal et un quelconque terminal distant, un circuit de mesure (6) mesure le temps de transmission aller et retour d'un signal de mesure entre les deux terminaux. Une unité de commande (7) sélectionne l'une des plages contenant le temps mesuré afin d'activer l'un de plusieurs moyens de minimisation d'écho inclus dans le premier terminal, correspondant à la plage sélectionnée. Les moyens de minimisation peuvent être une unité de commande de gains variables (4) pour amplificateurs d'émission et réception (21, 31) et un annuleur d'écho (5) associés à des plages intermédiaires comprises entre une première plage inférieure associée à aucune activation de moyens de minimisation d'écho et une dernière plage associée à un mode de transmission à l'alternat.

FIG. 2

EP 0 515 242 A1

La présente invention concerne un procédé pour minimiser l'écho acoustique dans un terminal téléphonique pour chacune des communications téléphoniques établies avec des seconds terminaux téléphoniques distants. Ce procédé contribue à optimiser la qualité des communications téléphoniques, c'est-à-dire à atténuer l'effet de l'écho-acoustique, que l'un des terminaux soit fixe ou mobile. En particulier, ce procédé est mis en oeuvre dans des terminaux modernes reliés par transmission numérique et codant numériquement la parole.

L'écho acoustique est dû à l'insuffisance de découplage entre le microphone et l'écouteur du combiné du terminal, ou entre le microphone et le haut-parleur pour un terminal à écoute amplifiée ou du type "mains-libres", ou encore à la réverbération du signal acoustique reçu par le local où est placé le terminal. Cet écho acoustique est quelquefois important dans le cas des terminaux portatifs dans lesquels les contraintes de miniaturisation notamment du microphone et de l'écouteur sont extrêmes.

L'écho peut être également d'origine électrique. C'est le cas lorsque le canal de transmission comporte une partie analogique à deux fils et qu'une transition deux fils-quatre fils est imparfaitement équilibrée, ou encore s'il existe une diaphonie significative entre les deux sens de transmission, par exemple au niveau du cordon du combiné du terminal.

Lorsque le temps de transmission aller et retour du signal téléphonique entre les deux terminaux en communication est inférieur à quelques millisecondes, l'écho acoustique n'est pas pratiquement perceptible par l'usager qui ne le distingue généralement pas de l'"effet local" usuel.

Pour des retards supérieurs, l'audition de l'écho par l'usager qui parle constitue une gêne de plus en plus importante : le "confort" de l'usager se dégrade lorsque le retard s'accroît jusqu'au point où les conditions sont jugées innacceptables si le niveau reçu est important. La Recommandation G.131 du CCITT, Fascicule III.1, pages 143 à 155, 1988, Melbourne, relative à l'effet de l'écho "électrique" donne une idée de l'importance de ce phénomène.

Diverses techniques connues ont été proposées et mises en oeuvre pour minimiser, voire annuler les effets nuisibles de l'écho. Dans le cas de l'écho électrique par exemple, une technique classique consiste à insérer des équipements annuleurs ou suppresseurs d'écho dans les canaux connus par le réseau téléphonique pour l'importance du délai de transmission (liaisons intercontinentales ou par satellite). Dans le cas des terminaux téléphoniques numériques actuels ou en cours de développement, tels que postes téléphoniques "3,1 kHz" ou "7 kHz", visiophones, radiotéléphones cellulaires, etc..., les conditions d'interfonctionnement sont si nombreuses et complexes qu'il est quasiment impossible de demander aux réseaux téléphoniques publics d'insérer des équipements destinés à minimiser la gêne apportée par l'écho en tenant compte des délais de transmission. La solution actuellement envisagée consiste donc à reporter au niveau des terminaux le soin de s'adapter aux différents cas rencontrés.

Le but de la présente invention est d'optimiser la qualité de chacune des communications téléphoniques établies dans un terminal téléphonique, en mettant en oeuvre des techniques de minimisation d'écho connues sélectionnées respectivement en fonction de critères de qualité de ces techniques. Plus particulièrement, ces critères reposent sur des plages de temps de transmission attribuées à ces techniques afin de sélectionner celle qui offre le meilleur confort de l'usager pour chaque communication.

A cette fin, un procédé pour minimiser l'écho acoustique dans un premier terminal téléphonique pour une communication téléphonique établie avec un second terminal téléphonique comprenant la mesure du temps de transmission aller et retour d'un signal de mesure transmis du premier terminal vers le second terminal, retransmis par le second terminal vers le premier terminal, et détecté par le premier terminal, est caractérisé par :

- la comparaison du temps de transmission mesuré avec des limites de plages prédéterminées de temps de transmission afin de sélectionner l'une des plages contenant le temps de transmission mesuré, et

- l'activation de l'un de plusieurs moyens de minimisation d'écho inclus dans le premier terminal et respectivement associés aux plages, en fonction de la plage sélectionnée.

Les techniques principalement susceptibles d'être mises en oeuvre pour la réduction de l'écho acoustique relèvent principalement des deux principes suivants :

- annulation de l'écho par soustraction d'un signal d'écho estimé, basé sur la connaissance du signal donnant naissance à l'écho ;

- atténuation du signal comportant l'écho dès qu'un signal utile est transmis dans le sens opposé.

L'annulation de l'écho acoustique local est une technique connue ; elle est indépendante de la communication et n'est profitable qu'à l'usager distant ; sa mise en oeuvre est, par contre, tout à fait souhaitable et pourrait être imposée par des normes.

L'annulation de l'écho acoustique distant est généralement considérée comme utopique pour plusieurs raisons :

- dans certains cas les transformations, compression de débit notamment, subies par le signal au cours des trajets aller et retour sont telles que la soustraction d'un écho "estimé" ne peut pas conduire à une amélioration sensible ;

- dès que le temps de transmission dépasse quelques dizaines de millisecondes, le temps de convergence du corrélateur chargé de générer l'écho estimé devient prohibitif.

Malheureusement, les techniques d'annulation d'écho, aussi utiles soient-elles, ont des performances limitées, probablement à 25 dB environ dans le meilleur des cas, qui peuvent être insuffisantes pour certains types de terminaux, de type mains libres notamment. Il faut donc utiliser d'autres techniques complémentaires.

Les techniques de détection d'activité des canaux de transmission et de commande corrélative des gains d'amplificateurs d'émission et de réception dans un terminal sont actuellement plus facilement utilisables et servent donc de base à la description d'une réalisation préférée d'un terminal téléphonique mettant en oeuvre le procédé conforme à l'invention.

Plusieurs plages de temps de transmission peuvent être sélectionnées :

- une première plage inférieure à une première limite prédéterminée qui, lorsqu'elle est sélectionnée, n'engendre au moins aucune commutation de gain ;
- un certain nombre de plages intermédiaires de temps de transmission correspondant à des limites prédéterminées, qui correspondent chacune à un couple de valeurs de gains dans le premier terminal, donc de l'efficacité pour la sonie en émission et en réception, assurant le meilleur compromis possible entre le niveau d'écho admissible dans cette plage de retard, et, la possibilité d'entendre une intervention de l'autre usager (double parole) ;
- une dernière plage supérieure à une dernière limite et associée à un blocage alternatif complet des sens de transmission dans le premier terminal, correspondant à des communications à l'alternat dit en mode semi-duplex.

L'invention concerne également un terminal téléphonique pour la mise en oeuvre du procédé conforme à l'invention et comprenant plusieurs moyens de minimisation d'écho acoustique interposés dans des voies de réception et d'émission de signaux téléphoniques. Ce premier terminal est caractérisé en ce qu'il comprend :

- des moyens pour émettre un signal de mesure de temps de transmission vers un second terminal téléphonique après l'établissement d'une communication entre les deux terminaux,
- des moyens pour détecter ledit signal de mesure retransmis par le second terminal,
- des moyens pour mesurer un temps de transmission entre l'émission et la détection dudit signal de mesure, et
- des moyens pour sélectionner l'une des plages prédéterminées de temps de transmission contenant le temps de transmission mesuré afin d'activer le moyen de minimisation d'écho acoustique associé à la plage sélectionnée.

En fonction du type de communication que doit établir le terminal et des contraintes de coût, le terminal peut comprendre au moins l'un des moyens de minimisation d'écho suivants :

- un annuleur d'écho,
- un circuit pour commander des gains d'amplificateurs à gain variable,
- un moyen comprenant un annuleur d'écho et un circuit pour commander des gains d'amplificateurs à gain variable, et
- un moyen pour imposer un fonctionnement en mode semi-duplex ou un fonctionnement en mode duplex.

D'autres caractéristiques et avantages de la présente invention apparaîtront plus clairement à la lecture de la description suivante de plusieurs réalisations préférées de l'invention en référence aux dessins annexés correspondants dans lesquels :

- la Fig.1 est un bloc-diagramme schématique d'un terminal téléphonique selon l'invention ;
- la Fig.2 est un bloc-diagramme montrant en détail des chaînes d'émission et de réception comprises dans un terminal téléphonique selon une réalisation préférée ; et
- la Fig.3 est un bloc-diagramme montrant en détail un circuit de mesure de temps de transmission inclus dans un terminal téléphonique selon une autre réalisation préférée.

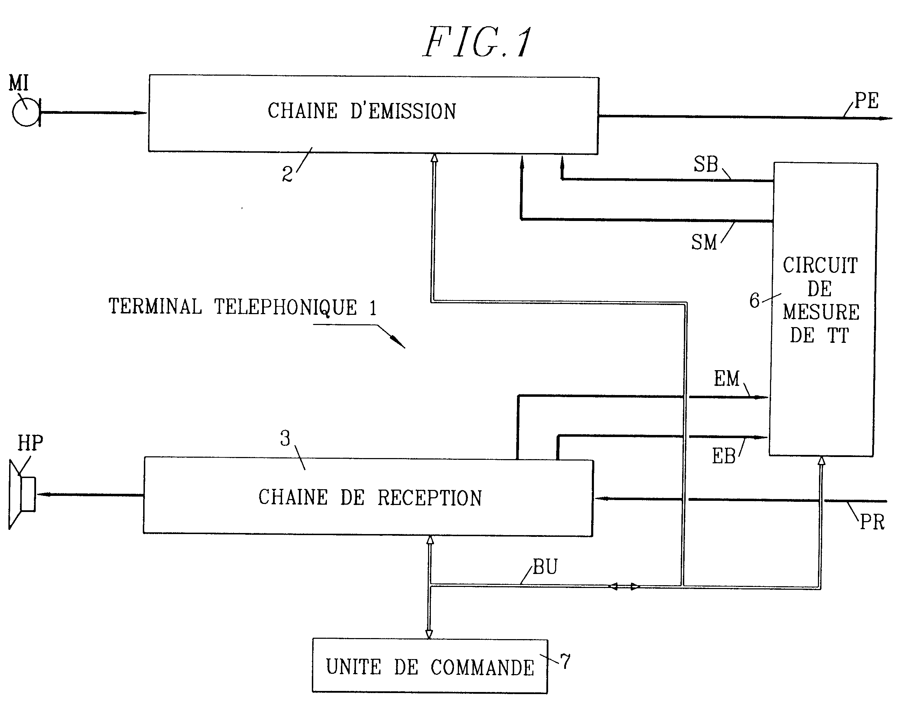

En référence à la Fig.1, un terminal téléphonique 1 est desservi par une ligne téléphonique numérique d'abonné à deux paires de fils PE et PR. La première paire de fils PE convoie des signaux numériques d'émission provenant d'une chaîne d'émission 2, appelée également voie d'émission, incluse dans le terminal et reliée à un ou plusieurs transducteurs acousto-électriques en parallèle, tels qu'un microphone MI. La seconde paire de fils PR supporte des signaux numériques de réception qui sont appliqués à une chaîne de réception 3, appelée également voie de réception, incluse dans le terminal 1 et reliée à un ou plusieurs transducteurs électro-acoustiques en parallèle, tels qu'un haut-parleur HP ou un écouteur.

Les chaînes d'émission et de réception comprennent classiquement divers moyens de traitement de signaux vocaux inclus dans les terminaux ou postes téléphoniques modernes, particulièrement du type "mains -libres". Les moyens de traitement sont notamment destinés à minimiser l'écho acoustique entre le haut-parleur HP et le microphone MI en agissant sur les gains des signaux dans les voies d'émission et de réception et/ou en annulant cet écho dans la chaîne d'émission.

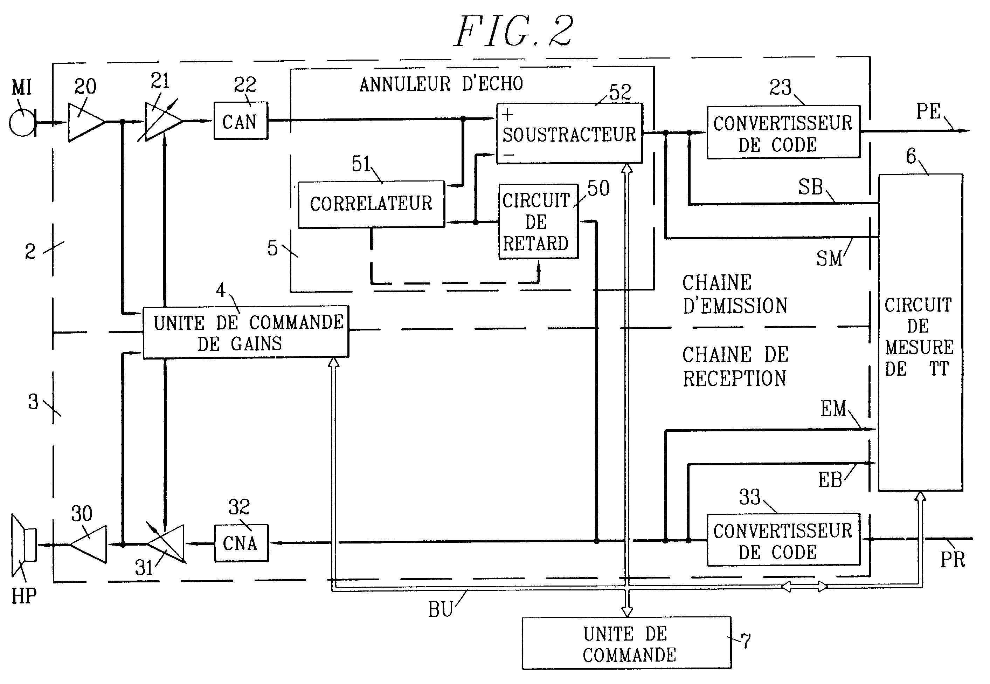

A titre d'exemple, des moyens de traitement de signaux vocaux sont détaillés dans la Fig.2. La chaîne d'émission 2 comprend en série, à partir du microphone MI, un préamplificateur 20, un amplificateur à gain variable 21 et un convertisseur analogique-numérique 22, et en sortie, un convertisseur de code 23 adapté au type de transmission dans la paire de fils PE. Réciproquement, la chaîne de réception 3 comprend en série, à partir de la paire de fils PR, un convertisseur de code 33, un convertisseur numérique-analogique 32, un amplificateur à gain variable 31 et un amplificateur de puissance 30 qui est relié au haut-parleur HP.

Le convertisseur 22 convertit le signal analogique de parole locale et éventuellement un écho acoustique qui est capté par le microphone MI et qui subit une amplification variable par les amplificateurs 20 et 21, en un signal numérique d'émission, par exemple à un débit de 104 kbit/s. Le convertisseur de code 23 convertit le signal numérique d'émission selon une loi de codage prédéterminée et effectue éventuellement une compression de débit suivant un algorithme normalisé. Le signal est ensuite transmis sous la forme d'un signal en code de ligne dans la paire de fils PE, le code de ligure étant par exemple un code bipolaire, de préférence à 64 kbit/s. Toutefois, le débit du signal transmis peut être plus faible pour être appliqué à un modulateur d'une chaîne de transmission radio-électrique.

Les convertisseurs 32 et 33 dans la chaîne de réception effectuent des opérations réciproques à celles effectuées par les convertisseurs 22 et 23 respectivement. Selon l'exemple précédent, un signal bipolaire reçu dans la paire de fils PR est converti en un signal numérique qui est ensuite converti en signal analogique avant d'être amplifié par un gain variable dans l'amplificateur 31, amplifié dans l'amplificateur de puissance 30 et transformé en un signal acoustique par le haut-parleur HP.

Selon la réalisation de terminal illustrée à la Fig.2, les chaînes d'émission et de réception comprennent en commun des moyens de minimisation d'écho sous la forme d'un circuit de commande de gains 4 et d'un annuleur d'écho local 5.

Le circuit de commande de gains 4 détecte l'activité vocale dans les deux chaînes 1 et 2 en recevant le signal microphonique à la sortie du préamplificateur 20 et le signal d'écoute à la sortie de l'amplificateur 31. Le circuit 4 compare le signal microphonique et le signal d'écoute et commande par exemple en sens inverse les gains des amplificateurs 21 et 31 en fonction de celui des signaux détectés qui a le niveau le plus élevé. Par exemple, lorsque le locuteur distant du terminal 1 parle, le gain dans l'amplificateur 31 est augmenté afin d'amplifier le signal d'écoute, et le gain dans l'amplificateur 32 est diminué afin d'atténuer le signal microphonique. Ces variations sont choisies de façon à minimiser l'écho acoustique dans le terminal téléphonique du locuteur distant.

Le circuit d'annulation d'écho 5 comprend schématiquement un circuit de retard variable 50 relié à la sortie du convertisseur de code 33, un corrélateur 51 ayant des entrées reliées aux sorties du circuit de retard et du convertisseur analogique-numérique 22, et un soustracteur 52 ayant des entrées directe (+) et inverse (-) reliées respectivement aux sorties du convertisseur 22 et du circuit de retard 50 et ayant une sortie reliée à l'entrée du convertisseur de code 23. Le circuit de retard et le corrélateur constituent un filtre transversal numérique adaptatif qui réalise un produit de convolution entre le signal microphonique numérique fourni par le convertisseur 22 et une suite de coefficients représentant une réponse impulsionnelle d'écho acoustique déduite du signal d'écoute numérique en sortie du convertisseur de code 33 afin d'estimer un écho acoustique entre le haut-parleur HP et le microphone MI. Le soustracteur 52 soustrait du signal microphonique l'écho estimé afin que l'écho réel soit quasi-annulé en entrée du convertisseur de code 23.

Comme il est connu, de nombreuses autres variantes de moyens de minimisation d'écho dans les chaînes d'émission et de réception peuvent être envisagées par l'homme du métier. En particulier, les circuits 21,4 et 31 relatifs aux gains d'amplification et les circuits 50, 51 et 52 relatifs à l'annulation d'écho peuvent être les uns sous forme de circuits numériques et les autres sous forme de circuits analogiques, ou bien tous sous forme de circuits analogiques ou numériques.

En se référant à nouveau à la Fig.1, le terminal téléphonique 1 comprend également un circuit de mesure de temps de transmission 6 et une unité de commande 7.

Le circuit de mesure 6 présente des entrées de détection de premier signal de mesure de temps de transmission et de bouclage de second signal de mesure, EM et EB, et des sorties de transmission de premier signal de mesure et de bouclage de second signal de mesure, SM et SB. Par exemple, comme montré à la Fig.2, les entrées EM et EB sont des entrées de signal numérique reliées à l'entrée du convertisseur numérique-analogique 32 dans la chaîne de réception 3, et les sorties SM et SB sont des sorties de signal numérique reliées à la sortie du soustracteur 52 dans la chaîne d'émission 2.

Le circuit de mesure 6 mesure le temps de transmission aller et retour au moins pour une communication téléphonique de départ, c'est-à-dire lorsque le premier terminal 1 est considéré comme terminal demandeur et appelle un second terminal téléphonique demandé éloigné à travers le réseau de commutation téléphonique général.

Dans ce cas, le circuit de mesure 6 du terminal 1 transmet par la paire de fils de ligne PE, via la sortie SM, un premier signal de mesure de temps de transmission au début de l'établissement de la communication, après la phase de composition du numéro d'appel du terminal demandé dans le terminal demandeur et réponse par le terminal demandé et avant la phase de "conversation" ou d'échanges de signaux de parole entre les terminaux. Dans le terminal demandé distant, qui est également un terminal téléphonique selon l'invention, le premier signal de mesure est prélevé par l'entrée EB du circuit de mesure du terminal demandé et bouclé en retour vers le terminal demandeur 1, via la sortie SB du circuit de mesure du terminal demandé. Le premier signal de mesure est finalement détecté à l'entrée EM du circuit de mesure 6 dans le terminal demandeur 1.

Comme cela apparaît ci-dessus, le circuit de mesure 6 dans un terminal 1 selon l'invention est destiné également à boucler momentanément la chaîne ou voie de réception sur la chaîne ou voie d'émission, c'est-à-dire à coupler l'entrée EB à la sortie SB, afin de retransmettre un second signal de mesure de transmission, identique au premier signal de mesure. Ce second signal de mesure est transmis par le circuit de mesure dans un terminal distant demandeur ayant appelé le terminal 1, considéré comme terminal demandé lors d'une communication d'arrivée relative à ce dernier terminal.

Le temps de transmission aller et retour TT du signal de mesure entre les deux terminaux en communication et mesuré par le terminal demandeur résulte du retard apporté essentiellement par les moyens de transmission bidirectionnelle et les convertisseurs de code 23 et 33, selon la réalisation de la Fig. 2.

Comme il est connu, les moyens de transmission varient d'une communication à l'autre. Le temps de transmission TT peut être compris entre quelques millisecondes pour deux terminaux simples proches, par exemple rattachés à un même central téléphonique local, et plusieurs centaines de millisecondes pour deux terminaux situés dans des pays très éloignés ou introduisant eux-mêmes un retard. A titre d'exemple, le temps de transmission TT dépend des retards apportés :

- par des dispositifs de compression de débit et de codage du signal émis et des dispositifs réciproques aux précédents pour le signal reçu notamment pour des terminaux mobiles, éventuellement portables ;
- par des circuits de multiplexage et de tramage (formation de trame numérique) par exemple pour des liaisons à Accès Multiples à Répartition dans le Temps (AMRT) ;
- par des circuits de commutation, de répétition et d'acheminement des signaux de communication relativement nombreux pour des liaisons terrestres à grande distance, des liaisons sous-marines et des liaisons par satellite ;
- par des autocommutateurs et des aiguilleurs-brasseurs de voies de communication de divers types de réseaux de télécommunication ;
- par des circuits de retard de parole afin de synchroniser le son et des images animées, particulièrement le mouvement des lèvres, pour des communications entre terminaux visiophoniques.

La combinaison de ces différents retards est essentiellement variable d'un appel à l'autre. Le retard apporté par des transducteurs acousto-électriques et électro-acoustiques et des convertisseurs analogiques-numériques et numériques-analogiques inclus dans des terminaux est négligeable par rapport aux retards précédents. Le retard qui correspond au couplage acoustique entre haut-parleur et microphone dans un terminal est une caractéristique pratiquement constante du terminal et éventuellement de l'environnement du terminal.

Le temps de transmission TT est évalué dans le circuit de mesure 6 par exemple au moyen d'un compteur d'impulsions d'horloge. Le compteur est remis à zéro suite à l'établissement d'une communication et compte les impulsions d'horloge dès l'émission du premier signal de mesure de transmission par la sortie SM. Le compteur est arrêté en réponse à la réception du premier signal de mesure par l'entrée EM, après transmission aller et retour à travers les moyens de transmission relatifs à la communication établie entre le terminal demandeur 1 et le terminal demandé distant et bouclage à travers ce dernier. Le compte d'impulsions est lu ensuite par l'unité de commande 7.

L'unité de commande 7 est en relation non seulement avec des circuits connus d'établissement de communication (non représentés) inclus dans le terminal 1 mais également avec le circuit de mesure 6, l'unité de commande de gains 4, et le soustracteur 52 de l'annuleur d'écho 5 à travers un bus bidirectionnel BU (Fig. 2).

L'unité de commande surveille les circuits d'établissement de communication pour détecter l'établissement d'une communication de départ ou l'établissement d'une communication d'arrivée.

Suite à la fin de l'établissement de la communication, l'unité de commande 7 du terminal 1, considéré ici comme terminal demandeur, ordonne la mesure du temps de transmission TT au circuit de mesure 6. Simultanément, suite à la prise de ligne dans le terminal demandé, l'unité de commande de celui-ci commande le bouclage en reliant l'entrée EB à la sortie SB dans le circuit de mesure de ce terminal demandé.

Après lecture du compte d'impulsions d'horloge dans le compteur inclus dans le circuit de mesure et d'évaluation du temps de transmission TT, l'unité de commande 7 sélectionne le circuit de commande de gains 4 et le soustracteur 52 de l'annuleur d'écho 5 en fonction de la valeur du temps TT, à travers le bus bidirectionnel de commande et de données BU également relié au circuit de mesure 6 et aux circuits d'établissement de communication. L'unité de commande 7 compare le temps mesuré TT à des seuils croissants prédéterminés $TT_1$, $TT_2$, ... $TT_N$ limitant des plages de temps de propagation définies ci-après, avec $TT_1 < TT_2 < TT_3 < ... < TT_N$.

De préférence, les plages sont au moins au nombre de trois et comprennent une première plage inférieure à une première limite $TT_1$, au moins une plage intermédiaire comprise entre la première limite et une dernière limite $TT_N$, et une dernière plage supérieure à la dernière limite $TT_N$, N étant un entier supérieur ou égal à deux. Pour la réalisation illustrée à la Fig.2, il est envisagé N + 1 = 4 plages dont deux plages intermédiaires, qui sont définies ci-après.

1) TT est compris dans une première plage inférieure, telle que $TT<TT_1$ où $TT_1$ est égal à quelques millisecondes, typiquement égal à 5 ms, ce qui correspond à deux terminaux en communication relativement proches. Aucune précaution n'est prise pour minimiser ou annuler l'écho acoustique. En effet, l'écho se confond avec l'effet local habituel et ne dégrade pas le confort de l'usager du terminal. Dans ce cas, l'unité de commande 7 inhibe le fonctionnement du circuit de commande de gains 4 et de l'annuleur d'écho 5. Selon une autre variante, sachant que le bruit parasite engendré par l'annuleur d'écho est très faible et imperceptible, le fonctionnement de celui-ci n'est pas inhibé pour cette première plage. Le gain des amplificateurs 21 et 31 est égal à une valeur nominale et le soustracteur 52 n'opère alors aucune soustraction d'écho, c'est-à-dire est transparent au signal microphonique d'émission entre le convertisseur analogique-numérique 22 et le convertisseur de code 23.

2) TT est compris dans une seconde plage, constituant une première plage intermédiaire, telle que $TT_1 \leqq TT < TT_2$, où $TT_2$ est égal à quelques dizaines de millisecondes, typiquement égal à 20 ms, ce qui correspond à deux terminaux en communication distants de quelques milliers de kilomètres à travers le réseau commuté téléphonique classique. L'unité de commande 7 inhibe le fonctionnement du circuit de commande de gains 4, comme pour la première plage, et active le soustracteur 52 afin que l'écho réel soit quasiment annulé par l'annuleur 5.

3) TT est compris dans une troisième plage, constituant une seconde plage intermédiaire, telle que $TT_2 \leqq TT < TT_3 = TT_N$, où $TT_N$ est égal à quelques centaines de millisecondes, typiquement égal à 200 ms, ce qui correspond par exemple à une communication transcontinentale entre deux terminaux téléphoniques. Dans ce cas, l'unité 7 active l'unité de commande de gains 4 ainsi que le soustracteur 52 et donc l'annuleur d'écho 5.

La commande opposée des gains des amplificateurs 21 et 31 qui contribue à affaiblir le couplage acoustique, perturbe d'autant plus la qualité de la communication que le temps de transmission TT augmente.

4) TT est compris dans une quatrième plage, constituant la dernière plage, telle que $TT_3 = TT_N \leqq TT$, ce qui correspond par exemple à une communication intercontinentale, via satellite, entre deux terminaux éloignés de plusieurs dizaines de milliers de kilomètres, ou à une communication entre deux terminaux mobiles. Dans ce cas, l'unité de commande 7 inhibe le fonctionnement de l'annuleur d'écho 5 et active l'unité de commande de gains 4 en fonctionnement à l'alternat. Dans ces conditions, par exemple, lorsque l'un des signaux d'émission et de réception est plus élevé que l'autre, le gain de l'amplificateur 21, 31 associé au signal le plus élevé est égal à un gain maximal, et le gain de l'autre amplificateur 21, 31 associé au signal le plus faible est égal à zéro. Le fonctionnement à l'alternat étant inconfortable pour les usagers n'est ainsi mis en oeuvre que pour un très faible nombre de communications.

Comme déjà dit, l'entier N peut être supérieur à deux, et le nombre N-1 de plages intermédiaires consécutives peut être supérieur à un ou deux. Les plages intermédiaires peuvent être associées respectivement à un ou des annuleurs d'écho, à des circuits pour commander des gains d'amplificateur, à des moyens combinant chacun un annuleur d'écho et un circuit de commande de gains, et à d'autres moyens connus de minimisation d'écho.

Après la lecture du temps de transmission aller et retour mesuré TT et préalablement à la sélection de l'une des plages et à l'activation éventuelle du circuit 4 et/ou de l'annuleur 5, l'unité de commande 7 du terminal demandeur 1 communique, via le circuit de mesure 6, un message numérique de débouclage au terminal demandé distant qui prend connaissance du même temps de transmission aller et retour TT précédemment mesuré, selon l'une des deux variantes suivantes.

Selon une première variante, le message de débouclage contient, outre un ordre de débouclage pour déconnecter l'entrée EB de la sortie SB dans le circuit de mesure du terminal demandé, la valeur du temps TT mesurée précédemment dans le terminal demandeur. Après une période sensiblement supérieure à TT/2 tenant compte de la longueur du message, les unités de commande 7 dans les deux terminaux sélectionne l'une des plages de temps de transmission pour commander simultanément les activations éventuelles des circuits de commande de gains et des annuleurs d'écho. Selon une autre alternative, au lieu de ne communiquer que la valeur du temps TT, l'unité de commande du terminal demandeur 1 insère dans le message, après sélection de la plage, soit le numéro de la plage sélectionnée, ou ce numéro avec la valeur du temps TT, soit un ordre d'activation adéquat du moyen de minimisation d'écho correspondant, tel que le circuit de commande de gains, ou l'annuleur d'écho.

Selon une seconde variante, le message de débouclage ordonne, outre le débouclage dans le circuit de mesure du terminal demandé, le déclenchement d'une mesure de temps de transmission aller et retour à l'unité de commande du terminal demandé. Cette dernière mesure est semblable à celle effectuée précédemment par le terminal demandeur. Les bornes EB et SB dans le terminal demandeur 1 sont reliées entre elles après transmission du message de débouclage, et un second signal de mesure de temps de transmission identique au premier signal est transmis par le circuit de mesure du terminal demandé, bouclé à travers le circuit de mesure du terminal demandeur et détecté dans le circuit de mesure du terminal demandé. Après une période prédéterminée nettement supérieure à $3TT/2$ et succédant à l'émission du message de débouclage, les bornes EB et SB dans le terminal demandeur sont déconnectées et simultanément les unités de commande dans les deux terminaux commandent l'activation éventuelle des moyens de minimisation d'écho dans les chaînes des terminaux correspondant à la plage de temps de transmission sélectionnée.

De préférence, pendant la ou les mesures de temps de transmission et la ou les sélections de plage, les transducteurs électro-acoustiques et acousto-électriques HP et MI dans les terminaux demandeur et demandé sont déconnectés des lignes téléphoniques correspondantes PR-PE. Les déconnexions sont par exemple réalisées en imposant un gain nul aux paires d'amplificateurs 21 et 31 par les unités de commande 7, via les unités de commande de gains 4, ou en ouvrant des commutateurs analogiques (non représentés) respectivement à l'entrée des chaînes d'émission et à la sortie des chaînes de réception sous le contrôle des unités de commande 7. En outre, pendant les mesures et sélections, les usagers des terminaux sont de préférence avisés de l'impossibilité d'échange de signaux de parole par l'activation de voyants ou l'affichage d'un message particulier sur des écrans des terminaux (non représentés) commandés par les unités de commande 7. L'échange de signaux de parole n'est donc pas tronqué après l'établissement de la communication, puisque les usagers sont avertis de la phase de mesure et sélection.

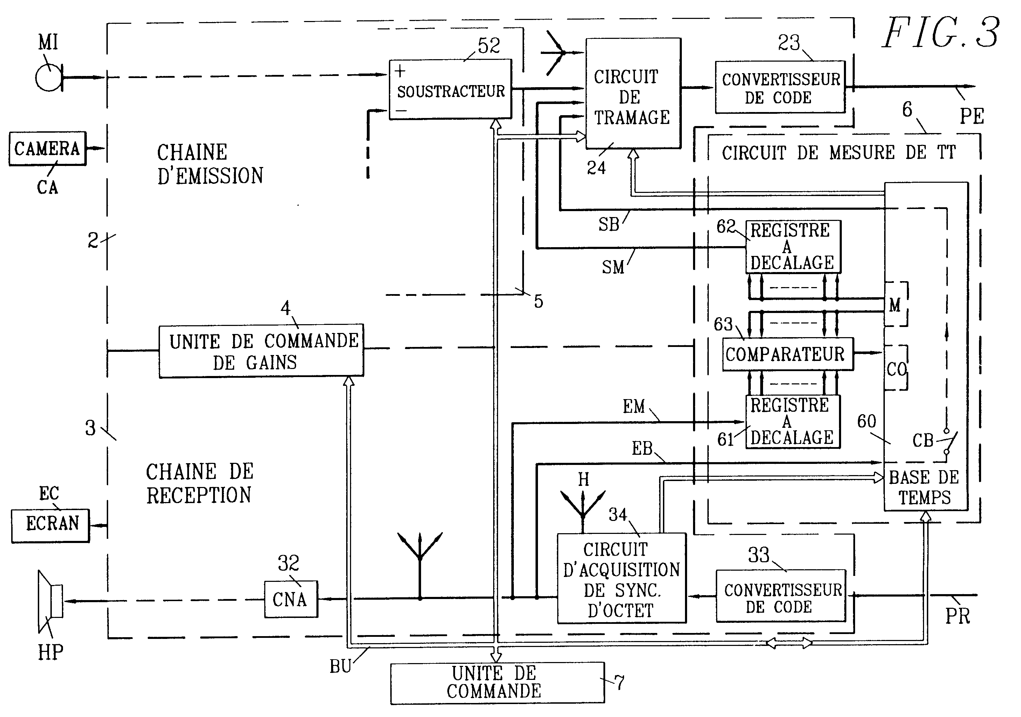

A titre d'exemple, un circuit de mesure 6 est montré à la Fig.3. Ce circuit de mesure est destiné à un terminal téléphonique numérique du type visiophone possédant une caméra CA reliée à la chaîne d'émission 2 et un écran EC relié à la chaîne de réception 3. Pour ce terminal visiophonique, les échanges de signaux sont conformes à la "structure de trame d'un canal à 64 kbit/s pour les téléservices audiovisuels" définie dans la recommandation H.221 du CCITT, Fascicule III.6, pages 106 à 117, Melbourne, 1988. Selon cette recommandation, chacun des canaux ou voies de réception et d'émission à 64 kbit/s présente une structure en octets transmis à une cadence de 8 kHz. Le bit no.8 des octets forme un sous-canal à 8 kbit/s, appelé canal de service (SC). La capacité résiduelle de 56 kbit/s supportée dans les bits 1 à 7 de chaque octet permet de transporter divers signaux dans le cadre d'un service multimédia, tels que par exemple du son et des images animées, compressées pour des terminaux visiophoniques.

Selon l'invention, les premier et second signaux de mesure de temps de transmission et les divers messages échangés entre les terminaux pour la mesure de temps de transmission et la sélection de plage selon les variantes précédentes sont transmis dans les canaux de service définis par la recommandation H.221.

En référence à la Fig.3, la chaîne de réception 3 comprend un circuit d'acquisition de synchronisation d'octet 34, interconnecté entre le convertisseur de code 33 et le convertisseur numérique-analogique 32, et la chaîne de réception d'émission 2 comprend un circuit de tramage 24 interconnecté entre le soustracteur 52 et le convertisseur de code 23. Le circuit 34 récupère notamment un signal d'horloge d'octet H. Le signal d'horloge H est distribué aux divers circuits du terminal 1. Le circuit de tramage 24 structure le canal d'émission en trames et multitrames et en particulier insère divers mots et messages dans le canal de service d'émission sous le contrôle de l'unité de commande 7, via le bus BU.

Le circuit de mesure 6 comprend une base de temps 60, deux registres à décalage 61 et 62 et un comparateur numérique 63.

Les registres 61 et 62 et le comparateur 63 ont un nombre déterminé d'étages égal au nombre de bits d'un mot de mesure de temps de transmission, en tant que premier signal de mesure de temps de transmission, et servent ainsi à la mesure du temps de transmission TT lorsque le terminal 1 est un terminal demandeur, ou un terminal demandé, selon la seconde variante. L'entrée du premier registre constitue l'entrée de détection de signal de mesure EM du circuit de mesure qui est reliée à la sortie du circuit d'acquisition 34. Des premières entrées parallèles du comparateur 63 sont reliées aux sorties du registre 61 et des secondes entrées du comparateur 63 sont reliées à une mémoire morte M contenant le mot de mesure de temps de transmission et incluse dans la base de temps 60. La sortie du second registre à décalage 62 constitue la sortie SM du circuit de mesure 6 qui est reliée au circuit de tramage 24. Les entrées parallèles du registre 62 reçoivent le mot de mesure de la mémoire M. Ainsi, lors d'une phase de mesure, un compteur d'impulsions d'horloge d'octet CO inclus dans la base de temps 60 et dont l'entrée de blocage est reliée à la sortie du comparateur 63, est déclenché après le transfert d'un mot de mesure du registre 62 vers le canal de service d'émission à travers le circuit de tramage 24, et le comparateur 63 compare le mot de mesure lu en mémoire morte avec les mots dans le canal de service de réception au rythme binaire de canal. Lorsque le comparateur 63 détecte une identité de mot de mesure, celui-ci arrête le comptage d'impulsions dans le compteur dont le compte est ensuite lu par l'unité de commande 7 pour en déduire le temps de transmission aller et retour TT à 125 µs près.

La base de temps 60 comprend également un commutateur de bouclage CB dont l'entrée et la sortie constituent respectivement les entrée et sortie de bouclage EB et SB du circuit de mesure 6 reliées à la sortie du circuit d'acquisition 34 et à une entrée du circuit de tramage 24. Le commutateur CB est fermé seulement pendant une première phase de mesure de temps de transmission lorsque le terminal 1 est un terminal demandé. L'entrée EB et la sortie SB peuvent recevoir et transmettre également les divers mots de message échangés pendant les phases de mesure et de sélection de plage.

## Revendications

**1** - Procédé pour minimiser l'écho acoustique dans un premier terminal téléphonique (1) pour une communication téléphonique établie avec un second terminal téléphonique comprenant :

- la mesure du temps de transmission aller et retour (TT) d'un signal de mesure transmis du premier terminal (1) vers le second terminal, retransmis par le second terminal vers le premier terminal, et détecté par le premier terminal, caractérisé par :
- la comparaison du temps de transmission mesuré (TT) avec des limites ($TT_1$ à $TT_N$) de plages prédéterminées de temps de transmission afin de sélectionner l'une des plages contenant le temps de transmission mesuré, et
- l'activation de l'un de plusieurs moyens de minimisation d'écho (4,5) inclus dans le premier terminal et respectivement associés aux plages, en fonction de la plage sélectionnée.

**2** - Procédé conforme à la revendication 1, caractérisé par plusieurs plages prédéterminées qui sont :

- une première plage ($<TT_1$) inférieure à une première limite prédéterminée ($TT_1$) qui, lorsqu'elle est sélectionnée, n'engendre aucune activation de moyens de minimisation d'écho,
- plusieurs plages intermédiaires consécutives ($TT_1$ à $TT_N$) comprises entre la première limite et une dernière limite prédéterminée ($TT_N$) supérieure à la première limite ($TT_1$) et respectivement associées à des moyens de minimisation d'écho (4 ; 5 ; 4+5) relatifs à au moins de la commande de gains d'amplification et/ou de l'annulation d'écho, et
- une dernière plage ($>TT_N$) supérieure à la dernière limite ($TT_N$) et associée à des moyens de communication à l'alternat (21, 31) inclus dans le premier terminal.

**3** - Procédé conforme à la revendication 2, caractérisé par des plages intermédiaires qui sont au moins :

- une seconde plage ($TT_1$, $TT_2$) qui, lorsqu'elle est sélectionnée, engendre l'activation de moyens d'annulation d'écho (5) inclus dans le premier terminal, et
- une troisième plage ($TT_1$, $TT_2$) qui, lorsqu'elle est sélectionnée, engendre l'activation desdits moyens d'annulation d'écho (5) et de moyens de commande de gains d'amplificateurs d'émission et de réception (4) inclus dans le premier terminal,
- la seconde plage étant de préférence inférieure à la troisième.

**4** - Procédé conforme à l'une quelconque des revendications 1 à 3, caractérisé en ce que, lorsque le premier terminal est un terminal demandeur, le premier terminal transmet après la mesure du temps de transmission un message au second terminal qui contient :

- un ordre de débouclage pour déconnecter des bornes (EB, SB) dans le second terminal à travers lesquelles le signal de mesure est retransmis et,
- au moins l'un des deux paramètres consistant en la valeur du temps de transmission mesuré (TT) et le numéro de la plage sélectionné afin que le second terminal commande l'activation de l'un de plusieurs moyens de minimisation d'écho (4, 5) inclus dans le second terminal en fonction dudit paramètre.

**5** - Procédé conforme à l'une quelconque des revendications 1 à 3, caractérisé en ce que, lorsque le premier terminal est un terminal demandeur, le premier terminal, après la mesure du temps de transmission, connecte des premières bornes (EB, SB) à travers lesquelles un second signal de mesure est à retransmettre et transmet un message au second terminal qui contient :

- un ordre de débouclage pour déconnecter des secondes bornes (EB, SB) dans le second terminal à travers lesquelles le premier signal de mesure était retransmis et,
- un ordre de déclenchement de mesure de temps de transmission du second signal de mesure, afin que le second terminal effectue également une comparaison de temps de transmission et une activation de l'un de plusieurs moyens de minimisation d'écho inclus dans le second terminal, ledit premier terminal déconnectant lesdites premières bornes (EB, SB) après une période prédéterminée supérieure à la mesure du temps de transmission du second signal de mesure.

**6** - Procédé conforme à l'une quelconque des revendications 1 à 5, caractérisé par une déconnexion de transducteurs acousto-électriques et électro-acoustiques (MI, HP) inclus dans les terminaux (1) par rapport à des voies d'émission et de réception de signaux téléphoniques (2, 3) pendant au moins la mesure du temps de transmission (TT).

7 - Procédé conforme à l'une quelconque des revendications 1 à 6, caractérisé en ce que les signaux de mesure et messages échangés par les terminaux pour la mininimisation d'écho sont transmis dans un canal numérique de service (bit n° 8) multiplexé avec un canal numérique de données et de parole (bits n° 1 à 7) ayant un débit plus élevé que celui du canal de service.

8 - Terminal téléphonique (1) pour la mise en oeuvre du procédé conforme à l'une quelconque des revendications 1 à 7, comprenant plusieurs moyens de minimisation d'écho acoustique (4, 5) interconnectés dans des voies de réception et d'émission de signaux téléphoniques (2, 3), caractérisé en ce qu'il comprend :

- des moyens (62) pour émettre un signal de mesure de temps de transmission vers un second terminal téléphonique après l'établissement d'une communication entre les deux terminaux,
- des moyens (61, 63) pour détecter ledit signal de mesure retransmis par le second terminal,
- des moyens (60) pour mesurer un temps de transmission (TT) entre l'émission et la détection dudit signal de mesure, et
- des moyens (7) pour sélectionner l'une des plages prédéterminées de temps de transmission ($TT_1$ à $TT_N$) contenant le temps de transmission mesuré (TT) afin d'activer le moyen de minimisation d'écho (4, 5) associé à la plage sélectionnée.

9 - Terminal téléphonique conforme à la revendication 8 comprenant au moins l'un des moyens de minimisation d'écho suivants :

- un annuleur d'écho (5),
- un circuit (4) pour commander des gains d'amplificateurs à gain variable (21, 31),
- un moyen (5,4) comprenant un annuleur d'écho et un circuit pour commander des gains d'amplificateurs à gain variable, et
- un moyen (4, 21, 31) pour imposer un fonctionnement en mode semi-duplex ou un fonctionnement en mode duplex.

10 - Terminal téléphonique conforme à la revendication 9, caractérisé en ce que, lorsqu'il contient un circuit pour commander des gains (4), ledit circuit est utilisé comme moyen pour imposer un fonctionnement en mode semi-duplex en commandant alternativement des gains nul et maximum dans les amplificateurs (21, 31) lorsque la plage correspondant aux plus grandes valeurs de temps de transmission ($>TT_N$) est sélectionnée, et comme moyen pour imposer au fonctionnement en mode duplex en commandant des gains nominaux dans les amplificateurs (21, 31) lorsque la plage correspondant aux plus petites valeurs de temps de transmission ($<TT_1$) est sélectionnée.

11 - Terminal téléphonique conforme à la revendication 9 ou 10, caractérisé en ce que les moyens pour sélectionner (7) inhibent toute soustraction d'écho dans un soustracteur d'écho (52) inclus dans l'annuleur d'écho (5) lorsqu'une plage sélectionnée n'est pas associée à l'annuleur d'écho (5).

*FIG.1*

EP 0 515 242 A1

FIG.2

FIG.3

EP 0 515 242 A1

Office européen
des brevets

**RAPPORT DE RECHERCHE EUROPEENNE**

Numero de la demande

| DOCUMENTS CONSIDERES COMME PERTINENTS | | EP    92 40 1245 |
| --- | --- | --- |

| Catégorie | Citation du document avec indication, en cas de besoin, des parties pertinentes | Revendication concernée | CLASSEMENT DE LA DEMANDE (Int. Cl.5) |
| --- | --- | --- | --- |
| Y | PATENT ABSTRACTS OF JAPAN<br>vol. 9, no. 102 (E-312)(1825) 4 Mai 1985<br>& JP-A-59 229 964 ( NIPPON DENSHIN ) 24 Décembre 1984<br>* abrégé * | 1,6,8,9 | H04M9/08<br>H04B3/20 |
| Y | IBM TECHNICAL DISCLOSURE BULLETIN<br>vol. 27, no. 3, Août 1984, NEW YORK (US)<br>page 1517;<br>H. CARSALADE ET AL: 'TANDEM OPERATING ECHO SUPPRESSOR AND ECHO CANCELLER'<br>* le document en entier * | 1,6,8,9 | |
| A | PROCEEDINGS OF EUSIPCO-88  FOURTH EUROPEAN SIGNAL PROCESSING CONFERENCE<br>5 Septembre 1988, GRENOBLE(FR)<br>pages 495 - 498;<br>WERNER ARMBRUSTER: 'HIGH QUALITY HANDS-FREE TELEPHONY USING VOICE SWITCHING OPTIMISED WITH ECHO CANCELLATION'<br>* figure 4 * | 1 | |
| A | PATENT ABSTRACTS OF JAPAN<br>vol. 9, no. 169 (E-328)(1892) 13 Juillet 1985<br>& JP-A-60 041 849 ( TOSHIBA ) 5 Mars 1985<br>* abrégé * | 1 | |
| A | EP-A-0 282 393 (CONNAN)<br>* colonne 1, ligne 13 - colonne 2, ligne 29 * | 1 | |

DOMAINES TECHNIQUES
RECHERCHES (Int. Cl.5)

H04M
H04B

Le présent rapport a été établi pour toutes les revendications

| Lieu de la recherche | Date d'achèvement de la recherche | Examinateur |
| --- | --- | --- |
| LA HAYE | 29 JUILLET 1992 | VANDEVENNE M.J. |

EPO FORM 1503 03.82 (P0402)